Europäisches Patentamt

European Patent Office

Office européen des brevets

(19)

(11) Publication number:

**0 155 563**
**B1**

(12) **EUROPEAN PATENT SPECIFICATION**

(45) Date of publication of patent specification: 17.08.88

(51) Int. Cl.⁴: **G 11 B 15/61**

(21) Application number: **85102265.7**

(22) Date of filing: **28.02.85**

(54) Rotary drum assembly.

(30) Priority: **07.03.84 JP 32708/84 u**

(43) Date of publication of application:
**25.09.85 Bulletin 85/39**

(45) Publication of the grant of the patent:
**17.08.88 Bulletin 88/33**

(84) Designated Contracting States:
**DE FR GB**

(56) References cited:
**AT-B- 354 759**
**DE-A-2 458 432**
**DE-A-2 522 581**
**DE-A-3 127 340**

(73) Proprietor: **VICTOR COMPANY OF JAPAN,**
**LIMITED**
**12, 3-chome, Moriya-Cho Kanagawa-ku**
**Yokohama-Shi Kanagawa-Ken 221 (JP)**

(72) Inventor: **Inoue, Osamu**
**Hanawaso, 1-36, Nakamura-cho Minami-ku**
**Yokohama-shi Kanagawa-ken (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a rotary drum assembly for a magnetic recording and playback apparatus as set forth in the preamble of claim 1. Such an assembly is known from DE—A—24 58 432.

This rotary drum assembly comprises a lower edge guide portion for guiding the lower edge of the tape only, whereas, any guide means for guiding the upper edge of the tape is missing. The lower edge of the tape is guided by the edge of the tape directly contacting the guide shoulder of the lower drum. Any guide means for the upper edge of the tape is missing. The peripheral wall section of the drum assembly contacting the upper edge portion of the tape is purely cylindrical.

Magnetic tape applicable to a rotary drum assembly of the kind described are usually produced by sputtering, vacuum deposition or like technology. The problem with such magnetic tapes is that they are inherently susceptive to curling in their widthwise direction and, due to the flat design of the drum contacting the upper edge of the tape, are thereby, often prevented from fully contacting the rotary heads, resulting in substantial losses in recording and reproducing data signals. Especially, where a layer of cobalt-chromium (Co-Cr) or any other vertically magnetizable material is deposited on the surface of a tape base as a magnetic layer, the tape is greater in stiffness than ordinary magnetic tapes and encounters much greater difficulty in remaining in contact with the rotary heads.

## SUMMARY OF THE INVENTION

It is therefore the object of the present invention to provide a rotary drum assembly for a magnetic recording and playback apparatus which allows a magnetic tape to make intimate contact with rotary heads despite widthwise curling of the tape, thereby eliminating losses otherwise developing during recording and reproduction of data signals. This object is attained by the features of the characterising clause of claim 1. Preferred embodiments of the invention are subject-matter of the dependent claims.

The present invention will become more apparent from the following detailed description taken with the accompanying drawings.

## BRIEF DESCRIPTION OF THE DRAWINGS

Fig. 1 is a fragmentary section of a prototype rotary drum assembly for a magnetic recording and playback apparatus;

Fig. 2 is a view of a magnetic tape as shown in an exemplary curled condition;

Fig. 3 is a fragmentary section of a rotary drum assembly embodying the present invention;

Fig. 4 is an enlarged section of a tape guide portion included in an upper stationary drum of the assembly shown in Fig. 3; and

Fig. 5 is a view similar to Fig. 4 but showing a tape guide portion included in a lower stationary drum of the same assembly.

## DESCRIPTION OF THE PREFERRED EMBODIMENT

While the rotary drum assembly of the present invention is susceptible of numerous physical embodiments, depending upon the environment and requirements of use, a substantial number of the herein shown and described embodiments have been made, tested and used, and all have performed in an eminently satisfactory manner.

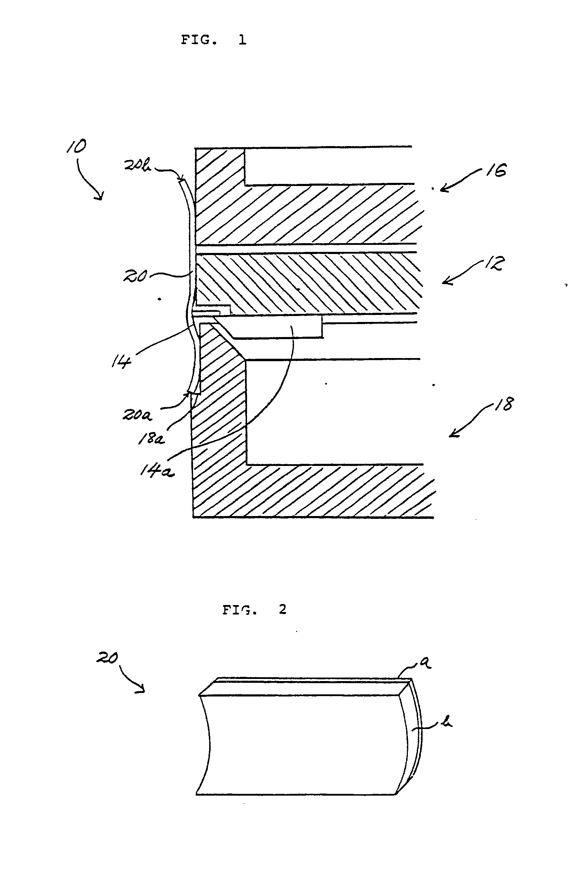

To better understand the present invention a brief reference will be made to a prototype rotary drum assembly, shown in Fig. 1. The rotary drum assembly, generally 10, is made up of a rotatable drum 12 provided with a rotary head 14 mounted on a head base 14a, an upper stationary drum 16 located coaxially with and above the rotable drum 12, and a lower stationary drum 18 located coaxially with and below the rotatable drum 12. The lower drum 18 is provided with a tape guide shoulder portion 18a along its outer periphery. As shown, the shoulder portion 18a has a generally L-shaped section and serves to guide a magnetic tape 20, which wraps around the lower drum 18 as shown in the profile, making contact with the lower edge 20a of the tape 20.

As shown in Fig. 1, the tape 20 is transported wrapping helically around the intermediate drum 12, upper drum 16 and lower drum 18 and restricted in position due to the abutment of its lower edge 20 a against the shoulder portion 18a. Meanwhile the intermediate drum 12 carrying the rotary head 14 is driven to rotate at a predetermined speed so that the head 14 record or reproduce such data signals as video signals into or out of the tape 20.

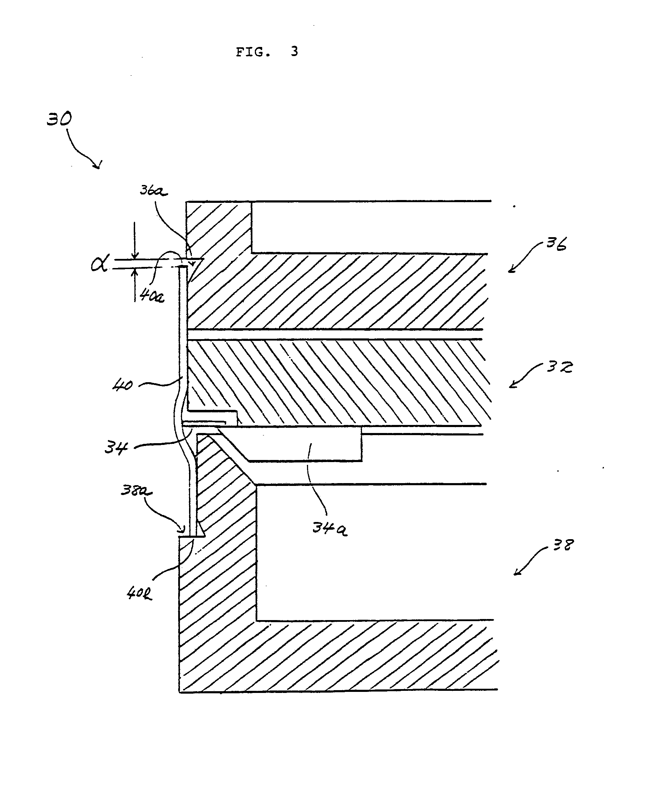

As earlier described, however, the tape 20 is apt to curl (bend) along its width as shown in Fig. 2 by way of example. In such a curved profile, the tape 20 fails to make contact with the rotary head 14 sufficient for recording or playback because its upper edge 20b (Fig. 1) and lower edge 20a respectively are spaced apart from the upper and lower edge drums 16 and 18, bringing about losses in recording and reproducing data signals. The tape 20 comprises a magnetic layer a and a base b.

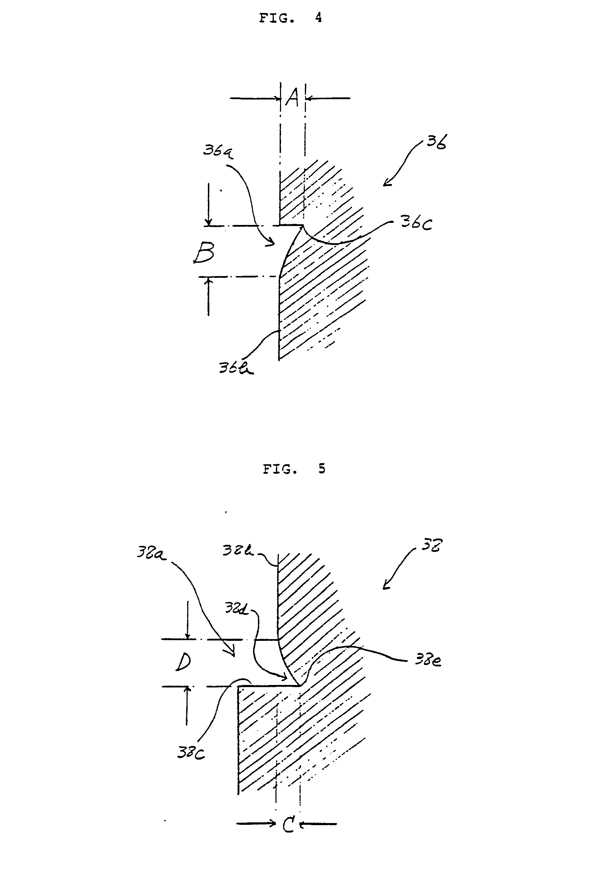

Referring to Fig. 3, a rotary drum assembly in accordance with the present invention is shown which is free from the drawback particular to the prototype construction as described above. The assembly of the present invention, generally 30, comprises a rotatable or intermediate drum 32 provided with a rotary head 34 mounted on a head base 34a, an upper stationary drum 36 coaxial with and overlying the intermediate drum 32, and a lower stationary drum 38 also coaxial with but underlying the intermediate drum 32. A tape upper edge guide portion 36a extends on and along the outer periphery of the upper stationary drum 36 in order to guide the upper edge 40a of a magnetic tape 40, which wraps around the drum 36. As shown, a gap having a width a is defined between the upper edge 40a of the tape 40 and the upper end of the tape upper edge guide portion 36a. The gap a is provided for allowing dimensional errors possibly developing when the various drum elements of the assembly are put together, thereby enhancing production efficiency of the rotary drum assemblies. Meanwhile, a tape lower edge guide portion 38a extends on and along the outer periphery of the lower stationary drum 38 so as to guide the tape 40 abutting against the lower edge 40b of the tape 40, the tape 40 wrapping around the drum 38 as well as on the drum 36.

The tape upper edge guide portion 36a of the upper drum 36 is shown in an enlarged scale in Fig. 4, and the tape lower edge guide portion 38a of the lower drum 38 in Fig. 5. As shown, the upper drum 36 includes a surface portion 36b on which the tape 40 slides and the tape upper edge guide portion 36a with which the tape upper edge 40a makes contact. The guide portion 36a is configured in a recess or groove having a generally wedge- or V-shaped section. With this configuration, the guide portion 36a has a groove bottom 36c having a diameter which is smaller than that of the surface portion 36b by an amount complementary to the groove formed to provide the guide portion 36a, i.e. depth of the groove 36a. In Fig. 4, the depthwise dimension of the guide portion 36a to the groove bottom 36c is labeled A and the widthwise dimension of the same is labeled B.

Likewise, the lower drum 38 comprises a surface portion 38b on which the tape 40 slides and the tape lower edge guide portion 38a with which the tape lower edge 40b makes contact. The guide portion 38a is made up of a shoulder 38c and a recess or groove 38d which, like the recess 36a, is cut to have a generally wedge- or V-shaped section. The groove 38d has a groove bottom 38e having a diameter which is smaller than that of the surface portion 38b by an amount complementary to the depth of the groove 38d. In Fig. 5, labeled C is the depthwise dimension of the groove 38d to the groove bottom 38e, while labeled D is the widthwise dimension of the groove 38d.

As shown in Fig. 3, the tape 40 has its upper edge 40a guided by the tape upper edge guide portion 36a of the upper drum 36 and its lower edge 40b guided by the shoulder 40b of the tape lower edge guide portion 38a of the lower drum 38 in abutment thereagainst. In this condition, the tape 40 is transported wrapping helically around the upper drum 36, intermediate drum 32, and lower drum 38, while being restricted vertically in position by the shoulder 38c. The intermediate drum 32 is driven to rotate at a predetermined speed so that the rotary head 34 supported thereby writes or read video signals or other data signals into or out of the tape 40.

The rotary drum assembly of the present invention was brought to tests in order to determine the degree of tape-to-head contact. When the depth A of the tape upper edge guide portion 36a of the upper drum 36 and the depth C of the lower tape edge guide portion 38a of the lower drum 38 were about 0.2 millimeter each and the width B of the guide portion 36a and that D of the guide portion 38a were about 1 millimeter each, the tape 40 was found remaining in stable and intimate contact with the head 34 when transported in the wrapping position regardless of tape size.

In summary, it will be seen that the present invention provides a rotary drum assembly for a magnetic recording and playback apparatus which insures a secure contact of a magnetic tape with a rotary head even if the tape curls along its width, thereby freeing recording and reproduction of data signals from losses. This advantage originates from the inherent configuration of the device wherein each of the upper and lower stationary drums is provided with a uniquely configured tape guide portion. Such will prove especially effective when applied to relatively stiff magnetic tapes which are coated with Co—Cr and other vertically magnetizable layers.

**Claims**

1. A rotary drum assembly for causing rotary head means to record or reproduce data signals into or out of a magnetic tape (40) which is transported wrapping around the rotary drum assembly (30), comprising;
   a cylindrical rotatable drum (32) on which the rotary head means (34) is mounted,
   a cylindrical upper stationary drum (36) positioned coaxially with and above said drum (32), said upper stationary drum (36) comprising a surface portion around which the tape (40) wraps.
   a cylindrical lower stationary drum (38) positioned coaxially with the rotatable drum (32) and said upper stationary drum (36) and below the rotatable drum (32) and comprising a surface portion around which the tape (40) wraps, said lower drum (38) being provided with a tape lower edge guide portion (38a) for guiding the lower edge (40b) of the tape, said lower edge guide portion (38a) comprising a drum surface portion of reduced diameter being reduced with respect to the adjacent surface portion around which the tape (40) wraps, characterized in that the upper stationary drum (36) comprises a tape upper end guide portion formed by the upper end of a V-shaped groove (36a) of the upper drum (36) for guiding an upper edge (40a) of the tape (40) without touching said edge (40a) through a gap (a) formed between the upper end of said V-shaped groove (36a) of the upper drum (36) and the upper edge (40a) of said tape (40).

2. A rotary assembly as claimed in claim 1, wherein the tape lower edge guide portion (38a), comprises a shoulder (38c) for guiding the tape (40) in contact with the lower edge (40b) of the tape (40), and a groove (38d) which is generally wedge- or V-shaped in a section.

3. A rotary drum assembly as claimed in claim 1 or 2, wherein the depth (A;C) of the said V-shaped grooves (36a;38d) is 0.2 mm and the widdth (B;D) thereof is 1 mm.

**Patentansprüche**

1. Drehtrommelanordnung für eine Drehkopfanordnung zum Aufzeichnen oder Wiedergeben von Datensignalen auf oder von einem Magnetband (40), das, die Drehtrommelanordnung (30) umschlingend, fortbewegt wird, enthaltend:

eine zylindrische drehbare Trommel (32), an der die Drehkopfanordnung (34) montiert ist,

eine zylindrische, obere stationäre Trommel (36), die koaxial mit und oberhalb der drehbaren Trommel (32) angeordnet ist, welche obere stationäre Trommel (36) einen Oberflächenabschnitt aufweist, um den das Band (40) geschlungen ist,

eine zylindrische untere, stationäre Trommel (38), die koaxial mit der drehbaren Trommel (32) und der oberen stationären Trommel (36) und unterhalb der drehbaren Trommel (32) angeordnet ist und einen Oberflächenabschnitt aufweist, um den das Band (40) geschlungen ist, wobei die untere Trommel (38) mit einem Führungsabschnitt (38a) zum Führen des unteren Randes (40b) des Bands versehen ist, welcher Bandführungsabschnitt (38a) einen Trommel-oberflächenabschnitt verminderten Durchmes-sers aufweist, der gegenüber dem benachbarten Oberflächenabschnitt, um den das Band (40) geschlungen ist, zurückgesetzt ist,

dadurch gekennzeichnet, daß die obere stationäre Trommel (36) einen Bandführungsabschnitt aufweist, der durch das obere Ende einer V-förmigen Nut (36a) der oberen Trommel (36) gebildet ist, zum Führen eines oberen Randes (40a) des Bandes (40) ohne Berührung des genannten Randes (40a) durch einen Spalt (α), der zwischen dem oberen Ende der V-förmigen Nut (36a) der oberen Trommel (6) und dem oberen Rand (40a) des Bandes (40) gebildet ist.

2. Drehtrommelanordnung nach Anspruch 1, bei der der Führungsabschnitt (38a) für den unteren Bandrand eine Schultee (38c) aufweist, zum Führen des Bandes (40) in Berührung mit dem unteren Rand (40b) des Bandes (40), und eine Nut (38d), die im Schnitt im wesentlichen keil- oder V-förmig ist.

3. Drehtrommelanordnung nach Anspruch 1 oder 2, bei der die Tiefe (A; C) der V-förmigen Nuten (36a; 38d) 0,2 mm und die Breite (B; D) derselben 1 mm ist.

**Revendications**

1. Un assemblage à tambour rotatif par lequel les têtes rotatives enregistrent ou reproduisent des signaux d'information sur ou à partir d'une bande magnétique (40) qui est enroulée autour de l'assemblage à tambour rotatif (30), comprenant:

un tambour cylindrique tournant (32) sur lequel est montée la tête rotative (34);

un tambour cylindrique supérieur fixe (36) positionné coaxialement avec ledit tambour tournant (32) et au-dessus de lui, ledit tambour supérieur fixe (36) comprenant une portion de surface autour de laquelle la band (40) s'enroule.

un tambour cylindrique inférieur fixe (38) positionné coaxialement avec le tambour tournant (32) et avec ledit tambour supérieur fixe (36), et en dessous du tambour tournant (32), et comprenant une portion de surface autour de laquelle la bande (40) s'enroule, ledit tambour inférieur fixe (38) étant équipé d'un élément de guidage du bord inférieur de la bande (38a) pour guider le bord inférieur (40b) de la bande, edit élément de guidage du bord inférieur (38a) comprenant une portion de surface du tambour de diamètre réduit, la réduction étant proportionnelle à la portion de surface adjacente autour de laquelle la bande (40) s'enroule, caractérisé par le fait que

le tambour supérieur fixe (36) comprend un élément de guidage du bord supérieur de la bande, formé par l'extrémité supérieure d'une rainure (36a) en forme de V sur le tambour supérieur (36), pour guider le bord supérieur (40a) de la bande (40), sans toucher ledit bord (40a), à travers un espace (α) formé entre l'extrémité supérieure de ladite rainure (36a) en forme de V sur le tambour supérieur (36) et le bord supérieur (40a) de ladite bande (40).

2. Un assemblage à tambour rotatif selon la revendication 1, dans lequel l'élément , de guidage du bord inférieure de la bande (38a) comprend un épaulement (38c) pour guider la bande (40) en contact avec le bord inférieure (40b) de la bande (40), et une rainure (38d) dont la section est généralement en forme de coin ou en forme de V.

3. Un assemblage à tambour rotatif selon les revendications 1 ou 2, dans lequel la profondeur (A;C) desdites rainures (36a; 38a) en forme de V est de 0,2 millimètre, et leur largeur de 1 millimè-tre.

FIG. 1

FIG. 2

FIG. 3

FIG. 4

FIG. 5